# EUROPÄISCHE PATENTANMELDUNG

(11) **EP 1 111 702 A2**
(43) Veröffentlichungstag der Anmeldung: **27.06.2001**
(21) Anmeldenummer: 00124039.9
(22) Anmeldetag: 04.11.2000
(51) Int. Cl.: H01M 8/02, H01M 8/04, H01M 8/06, B60K 15/03, B60L 11/18

(54) **Behälter für ein kohlenstoff- und wasserstoffhaltiges Fluid**

(30) Priorität: 24.12.1999 DE 19962947
(71) Anmelder: XCELLSIS GmbH, 73230 Kirchheim/Teck-Nabern (DE); BASF AKTIENGESELLSCHAFT, 67056 Ludwigshafen (DE)
(72) Erfinder: Boneberg, Stefan, c/oXCELLSIS GmbH, 72660 Beuren (DE); Karl, Martin, c/oXCELLSIS GmbH, 73272 Neidlingen (DE); Röser, Thomas, Dr., c/oXCELLSIS GmbH, 73265 Dettingen/Teck (DE); Schüssler, Martin, Dr., c/oXCELLSIS GmbH, 89073 Ulm (DE); zur Megede, Detlef, Dr., 73230 Kirchheim/Teck (DE); Harth, Klaus, Dr., c/o BASF Aktiengesellschaft, 67317 Altleiningen (DE); Hölzle, Markus, Dr., c/o BASF Aktiengesellschaft, 67281 Kirchheim/Wstr. (DE); Sprague, Michael, Dr., c/o BASF Aktiengesellschaft, 68161 Mannheim (DE)
(74) Vertreter: Kocher, Klaus-Peter Dipl.-Phys

(57) **Zusammenfassung**

Die Erfindung betrifft einen Behälter zur. Aufnahme eines kohlenstoff- und wasserstoffhaltigen Fluids zur Versorgung eines Brennstoffzellensystems mit einem Betriebsmittel, wobei der Behälter einen Eingang und einen Ausgang für das Fluid aufweist, wobei zwischen Eingang und Ausgang mindestens ein Durchlaßmittel für das Fluid angeordnet ist und welches zum Reinigen des Fluids vorgesehen ist.

## Beschreibung

Die Erfindung betrifft einen Behälter sowie die Verwendung des Behälters gemäß den Oberbegriffen der unabhängigen Ansprüche.

Es ist bekannt, verschiedene Systeme mit unterschiedlichen Fluiden als Betriebsmitteln zu betreiben, wie etwa Brennstoffzellen mit Methanol. In einem Brennstoffzellensystem wird aus dem Betriebsmittel Wasserstoff gewonnen, der in der Brennstoffzelle kontrolliert mit Sauerstoff zur Reaktion gebracht wird. Die dabei gewonnene elektrische Leistung kann von elektrischen Verbrauchern genutzt werden.

Flüssige Betriebsmittel bieten eine hohe Speicherdichte für Wasserstoff. Besonders bei der Verwendung von Brennstoffzellen in nicht-stationären Anlagen, wie etwa Fahrzeugen, bestehen sowohl Einschränkungen bezüglich dem zur Verfügung stehenden Raum als auch Sicherheitsbedenken hinsichtlich des Mitführens und/oder Lagerns größerer Volumina von Wasserstoffgas. Ebenso ist es vor allem für Brennstoffzellenfahrzeuge notwendig, eine ausreichend flächendeckende Versorgung mit Betriebsmitteln, insbesondere Wasserstoff, zu gewährleisten.

Ein wesentlicher Vorteil bei der Verwendung von Betriebsmitteln wie Methanol oder anderen kohlenstoff- und wasserstoffhaltigen Fluiden besteht darin, daß etwa Methanol an Tankstellen mit wesentlich weniger Aufwand verfügbar gemacht werden kann als beispielsweise Wasserstoffgas.

Prototypen von Brennstoffzellenfahrzeugen werden mit chemisch hochreinen Medien, z.B. Methanol oder Dimethylether, betrieben, da unerwünschte Beimengungen im Betriebsmittel im Brennstoffzellensystem leicht verschleppt und so chemisch aktive Bereiche im Brennstoffzellensystem vergiften können. Dagegen muß bei einem wirtschaftlichen Betrieb von Brennstoffzellenfahrzeugen, bei denen ein solches Betriebsmittel an Tankstellen getankt werden kann, wegen den üblichen Transportwegen und Transportmethoden mit einem höheren Verschmutzungsgrad des Betriebsmittels gerechnet werden, als es mit den verschiedenen chemisch aktiven Bereichen des Brennstoffzellensystems verträglich ist.

In der älteren Anmeldung DE 198 47 985 ist ein Behälter für ein Betriebsmittel von Brennstoffzellenfahrzeugen beschrieben, bei dem ein Filtermittel für Methanol eingesetzt wird.

Es ist die Aufgabe der Erfindung, einen Behälter für kohlenstoff- und wasserstoffhaltige Fluide verfügbar zu machen, welcher auch für Fluide mit geringem Reinheitsgrad geeignet ist.

Diese Aufgabe wird durch die Merkmale des unabhängigen Anspruchs gelöst. Weiter Vorteile und Ausgestaltungen der Erfindung gehen aus den weiteren Ansprüchen und der Beschreibung hervor.

Der erfindungsgemäße Behälter zur Aufnahme eines kohlenstoff-und wasserstoffhaltigen Fluids weist einen Eingang und einen Ausgang für das Fluid auf, wobei zwischen Eingang und Ausgang mindestens ein Durchlaßmittel für das Fluid angeordnet ist, welches zum Reinigen des Fluids vorgesehen ist.

Besonders bevorzugt ist das Durchlaßmittel aus einem Verbundkörper gebildet, der mindestens zwei Zonen aufweist, die eine unterschiedliche Durchlässigkeit zumindest für Bestandteile des Fluids aufweisen.

Der Vorteil besteht darin, daß Verunreinigungen, die durch die Herstellung und/oder den Transport in das Fluid gelangen können, entfernt werden. Besonders vorteilhaft ist, daß spezielle Verunreinigungen selektiv entfernt werden können.

Bevorzugt wird der Behälter zur Reinigung von flüssigen kohlenstoff- und wasserstoffhaltigen Medien verwendet.

Bevorzugt wird der Behälter zur Reinigung von Alkoholen, besonders bevorzugt Methanol, verwendet.

Bevorzugt wird der Behälter zur Reinigung von Kohlenwasserstoffen verwendet.

Bevorzugt wird der Behälter zur Reinigung von Ethern, besonders bevorzugt Dimethylether, verwendet.

Besonders bevorzugt ist die Verwendung des Behälters in einem Brennstoffzellensystem.

Bei der bevorzugten Verwendung des Behälters zur Reinigung eines Betriebsmittels in einem Brennstoffzellensystem, vorzugsweise in einem Brennstoffzellenfahrzeug, werden die im System enthaltenen katalytischen Komponenten vor einer Katalysatorvergiftung geschützt, wie etwa Reformer, CO-Oxidator und/oder die Brennstoffzelle. Außerdem werden metallische Komponenten wie Rohrleitungen, Wärmetauscher und dergl. vor korrosiven Verunreinigungen geschützt, wodurch ihre Lebensdauer verlängert wird. Außerdem können Betriebskosten eingespart werden, da die Preise für Betriebsmittel mit technischem Reinheitsgrad erheblich geringer sind als für Medien mit dem notwendigen hohen Reinheitsgrad.

Ein weiterer Vorteil ist darin zu sehen, daß eine mögliche Verstopfung von Leitungen und Durchflüssen vermieden wird. So weisen Verdampfer meist enge Kanäle auf, die durch Verunreinigungen leicht verstopft werden können.

Eine weitere bevorzugte Verwendung des Behälters betrifft die Verwendung in einer Tankanlage für Brennstoffzellenfahrzeuge. In diesem Fall kann gereinigtes oder zumindest vorgereinigtes Betriebsmittel in ein mit diesem Betriebsmittel mittelbar oder unmittelbar betriebenes Fahrzeug abgefüllt werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

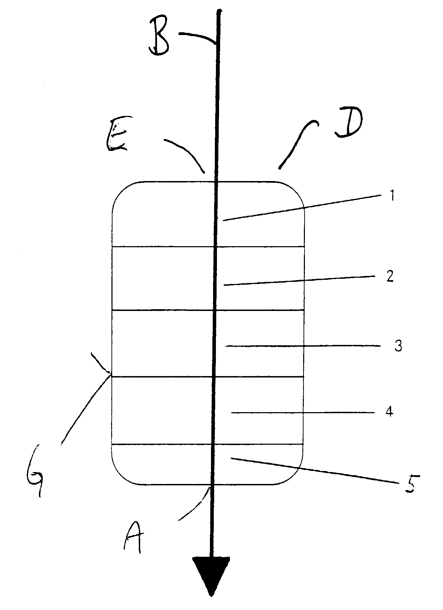

Die Erfindung ist nachstehend anhand einer Zeichnung näher beschrieben, wobei die Figur eine Prinzipdarstellung eines bevorzugten Behälters gemäß der Erfindung zeigt.

Die Erfindung ist im folgenden für einen bevorzugten Behälter für kohlenstoff- und wasserstoffhaltige Fluide beschrieben, die als Betriebsmittel für Brennstoffzellen verwendet werden, besonders bevorzugt für Methanol als Fluid. Die Erfindung ist jedoch nicht auf dieses Betriebsmittel eingeschränkt, sondern kann auch für andere Betriebsmittel verwendet werden. Insbesondere ist der Behälter auch für Wasser und/oder Wasser/Methanolgemisch geeignet. Der Behälter kann für flüssige und gasförmige Fluide verwendet werden. Bevorzugt wird der Behälter für kohlenstoffhaltige Wasserstoffträger verwendet, besonders bevorzugt für solche, die auch Sauerstoff aufweisen, wie etwa Alkohole, Kohlenwasserstoffe, Ether, Ester.

Der in der Figur dargestellte bevorzugte Behälter G weist als Durchlaßmittel D ein Reinigungsmittel für ein Fluid B auf. Fluid B stellt ein Betriebsmittel dar, beispielsweise für ein Brennstoffzellensystem. Das Durchlaßmittel D ist vorzugsweise durch einen Verbundkörper V gebildet, welcher aus verschiedenen Zonen 1, 2, 3, 4, 5 zusammengesetzt ist. Das Durchlaßmittel D wird vom Betriebsmittel B in dieser Reihenfolge durchströmt. Die Strömungsrichtung des Betriebsmittels B ist durch einen Pfeil angedeutet. Vorzugsweise nehmen die Zonen 1, 2, 3, 4, 5 jeweils vom Fluid B abgetrennte Bestandteile auf.

Jede Zone 1, 2, 3, 4, 5 ist unterschiedlich durchlässig für unterschiedliche Bestandteile des Betriebsmittels B. Vorzugsweise weist der Verbundkörper V mindestens zwei solcher Zonen auf, kann aber auch mehr Zonen aufweisen. Vorzugsweise weisen die Zonen Adsorber auf.

In einem besonders bevorzugten Behälter G für Methanol als Betriebsmittel ist Zone 1 des Durchlaßmittels D ein Partikelfilter, Zone 2 ein Filter für Kohlenwasserstoffe, Zone 3 ein Filter für höhere Alkohole, Ketone, Ester, Dimethylether, Zone 4 ein Filter für Chloride, Zone 5 ein Filter für Schwefelverbindungen. Die Reihenfolge der Zonen kann selbstverständlich auch von der beschriebenen abweichen.

Bevorzugte Materialien zur Entfernung von Kohlenwasserstoffen und höheren Alkoholen, Ketonen, Ester, Dimethylether sind Aktivkohle und/oder Zeolithe; bevorzugte Materialien zur Entfernung von Chloriden sind Kupferoxid und/oder andere Metallsalze und/oder Ionentauscherharze.

Besonders störende Verunreinigungen in Brennstoffzellen-Betriebsmitteln wie Methanol sind Partikel, paraffinische Kohlenwasserstoffe, Chlorkohlenwasserstoffe und anorganische Chlorverbindungen, im weiteren Sinne Halogenwasserstoffe und anorganische Halogenverbindungen,, höhere Alkohole, Dimethylether, Ester, ketone, Schwefelverbindungen, Additive (z.B. Flammfärbemittel, Färbungsmittel, Geruchsgebungsmittel).

Besonders bevorzugte Adsorbermaterialien, die für die Verwendung in einem erfindungsgemäßen Behälter G mit einem Durchlaßmittel D geeignet sind, sind Aktivkohle, Kupferoxid, zeolithische Molekularsiebe, oberflächenreiche Metalloxide, z.B. SiO₂, MgO, ZnO oder auch andere Metalloxide, Ionentauscherharze.

Ein weiterer bevorzugter Behälter G weist als Durchlaßmittel D eine einzige Zone auf, welche aus einer Mischung verschiedener Adorbermaterialien gebildet ist.

Eine weitere bevorzugte Ausgestaltung des Behälters besteht darin, zumindest eine Zone des Durchlaßmittels D mit einer Membran auszustatten, an der oder in welcher eine chemische Umsetzung von einem Stoffgemisch zum gewünschten Betriebsmittel stattfinden kann, insbesondere kann dafür ein Molekularsieb verwendet werden.

Es ist auch möglich, verschiedene Ausführungen der Durchlaßmittel D in einem Behälter G miteinander zu kombinieren.

Besonders günstig ist es, den erfindungsgemäßen Behälter G für ein Betriebsmittel eines Brennstoffzellensystems zu verwenden. In einer besonders günstigen Anordnung weist der Behälter G einen Eingang für ein Medium, einen ersten Ausgang und einen zweiten Ausgang auf. Der Behälter G ist durch mindestens ein Durchlaßmittel zumindest in einen eingangsseitigen und einen eingangsfernen Innenraum unterteilt. Der erste Ausgang ist im eingangsseitigen Innenraum und der zweite Ausgang im eingangsfernen Innenraum angeordnet.

Besonders günstig ist die Verwendung eines solchen Behälters als Betriebsmittelbehälter in einem Brennstoffzellenfahrzeug oder als Betriebsmittelbehälter in einer Tankanlage für Brennstoffzellenfahrzeuge.

Weiterhin bevorzugt ist es, einen erfindungsgemäßen Behälter G direkt in einem Brennstoffzellensystem anzuordnen, wie etwa in einer Brennstoffzuleitung vor einem Verdampfer zum Verdampfen des flüssigen Betriebsmittels. Zweckmäßigerweise wird ein solches Reinigungmittel zustromseitig bezogen auf die Strömungsrichtung des Betriebsmittels vor solchen Komponenten eingebaut, welche vor Verunreinigungen zu schützen sind.

Verunreinigtes Methanol wird durch das Durchlaßmittel D des Behälters geleitet. Dabei werden die beschriebenen Verunreinigungen durch Adsorption und/oder Filtration im Filter bzw. Durchlaßmittel D festgehalten. Aus dem Durchlaßmittel D tritt gereinigtes Methanol aus.

Ein besonderer Vorteil ist, daß eine Reinigung des Betriebsmittels vorzugsweise in einem Brennstoffzellenfahrzeug erfolgen kann. Alternativ kann auch eine entsprechende Reinigung des Betriebsmittels direkt an Tankstellen, z.B. in Zapfsäulen erfolgen. Insbesondere bei Methanol als Betriebsmittel werden als Verunreinigungen Kohlenwasserstoffe extrahiert, welche vorteilhaft vor Ort der weiteren Verwendung in Ottokraftstoffen zugeführt werden können.

Beim Einsatz eines erfindungsgemäßen Behälters, z.B. in einem Brennstoffzellenfahrzeug oder einem anderen System, werden die im Brennstoffzellensystem enthaltenen katalytischen Komponenten vor einer Katalysatorvergiftung geschützt, wie etwa Reformer, CO-Oxidator und/oder die Brennstoffzelle. Außerdem werden metallische Komponenten wie Rohrleitungen, Wärmetauscher und dergl. vor korrosiven Verunreinigungen geschützt, wodurch ihre Lebensdauer verlängert wird. Außerdem können Betriebskosten eingespart werden, da die Preise für Betriebsmittel mit technischem Reinheitsgrad erheblich geringer sind als für Medien mit dem notwendigen hohen Reinheitsgrad.

Der erfindungsgemäße Behälter B weist vorzugsweise eine Anzeige auf, welche den Füllstand des Durchlaßmittels D, wie etwa "voll" oder "leer" angibt. Besonders zweckmäßig ist, wenn das Durchlaßmittel D auswechselbar angoerdnet ist, so daß in bestimmten Wechselintervallen und/oder entsprechend einer Füllstandsanzeige bei Bedarf ein frisches Durchlaßmittel D eingesetzt werden kann.

Besonders bevorzugt wird der Behälter G verwendet, um ein Betriebsmittel von Kohlenwasserstoffen und Chlorverbindungen, insbesondere Chlorsalze, zu reinigen. Besonders Chlor ist in einem bevorzugten Brennstoffzellensystem störend, da es die Sinterung von kupferhaltigen Katalysatoren in Reformierungseinheiten des Brennstoffzellensystems in unerwünschter Weise beschleunigt. Dabei sind bereits Verunreinigungsmengen von etwa 10 ppb schädlich für den Katalysator.

## Patentansprüche

1. Behälter (G) zur Aufnahme eines kohlenstoff- und wasserstoffhaltigen Fluids (B) zur Versorgung eines Brennstoffzellensystems mit einem Betriebsmittel,
dadurch gekennzeichnet,
daß der Behälter (G) einen Eingang (E) und einen Ausgang (A) für das Fluid (B) aufweist, wobei zwischen Eingang (E) und Ausgang (A) mindestens ein Durchlaßmittel (D) für das Fluid angeordnet ist, welches zum Reinigen des Fluids (B) vorgesehen ist.

2. Behälter nach Anspruch 1,
dadurch gekennzeichnet,
daß das Durchlaßmittel (D) zumindest eine Zone (1, 2, 3, 4, 5) aufweist, die Bereiche unterschiedlicher Durchlässigkeit zumindest für Bestandteile des Fluids (B) aufweist.

3. Behälter nach Anspruch 1,
dadurch gekennzeichnet,
daß das Durchlaßmittel (D) durch einen Verbundkörper gebildet ist, der zumindest zwei Zonen (1, 2) aufweist, die zumindest für Bestandteile des Fluids (B) unterschiedlich durchlässig sind.

4. Behälter nach Anspruch 1,
dadurch gekennzeichnet,
daß zumindest eine Zone (1, 2, 3, 4, 5) des Durchlaßmittels (D) ein Adsorber ist.

5. Behälter nach Anspruch 1,
dadurch gekennzeichnet,
daß zumindest eine Zone (1, 2, 3, 4, 5) des Durchlaßmittels (D) ein Partikelfilter ist.

6. Behälter nach Anspruch 1,
dadurch gekennzeichnet,
daß zumindest eine Zone (1, 2, 3, 4, 5) des Durchlaßmittels (D) die Fähigkeit zu chemischer Umsetzung zumindest von einem Bestandteil des Fluids (B) aufweist.

7. Behälter nach Anspruch 1,
dadurch gekennzeichnet,
daß zumindest eine Zone (1, 2, 3, 4, 5) des Durchlaßmittels (D) eine dreidimensionale Mischung aus Adsorbermaterialien aufweist.

8. Behälter nach Anspruch 1,
dadurch gekennzeichnet,
daß zumindest eine Zone (1, 2, 3, 4, 5) des Durchlaßmittels (D) eine zumindest für einen Bestandteil des Fluids (B) semipermeable Membran aufweist.

9. Behälter nach Anspruch 1,
dadurch gekennzeichnet,
daß das Durchlaßmittel (D) ein Molekularsieb aufweist.

10. Behälter nach Anspruch 1,
dadurch gekennzeichnet,
daß zumindest eine Zone (1, 2, 3, 4, 5) des Durchlaßmittels (D) einen Keramikkörper aufweist.

11. Behälter nach Anspruch 1,
dadurch gekennzeichnet,
daß das Durchlaßmittel (D) austauschbar ist.

12. Behälter nach Anspruch 1,
dadurch gekennzeichnet,
daß der Behälter (G) eine Füllstandsanzeige für das Durchlaßmittel (D) aufweist.

13. Verwendung des Behälters nach einem der vorangegangenen Ansprüche zur Reinigung von Methanol.

14. Verwendung des Behälters nach einem der vorangegangenen Ansprüche zur Reinigung von Dimethylether.

15. Verwendung des Behälters nach einem der vorangegangenen Ansprüche in einem Brennstoffzellenfahrzeug.

16. Verwendung des Behälters nach einem der vorangegangenen Ansprüche in einer Tankanlage für Brennstoffzellenfahrzeuge.
